# EUROPÄISCHE PATENTSCHRIFT

(11) **EP 0 803 417 B1**
(45) Veröffentlichungstag und Bekanntmachung des Hinweises auf die Patenterteilung: **24.10.2001**
(21) Anmeldenummer: 97104905.1
(22) Anmeldetag: 22.03.1997
(51) Int. Cl.: B60T 1/087, F16D 57/04

(54) **Antriebseinheit mit einem Motor und einem Retarder**
Drive unit with an engine and a retarder
Unité d'entraînement avec un moteur et un ralentisseur

(30) Priorität: 25.04.1996 DE 19616426
(43) Veröffentlichungstag der Anmeldung: 29.10.1997
(73) Patentinhaber: Voith Turbo GmbH & Co. KG, 89522 Heidenheim (DE)
(72) Erfinder: Vogelsang, Klaus, 74564 Crailsheim (DE); Ott, Helmut, 74564 Crailsheim (DE); Rose, Peter, 89522 Heidenheim (DE); Heilinger, Peter, 74564 Crailsheim (DE)
(74) Vertreter: Dr. Weitzel & Partner

(56) Entgegenhaltungen:
- EP-A- 0 707 140
- DE-A- 1 946 167
- DE-C- 3 301 560
- DE-C- 3 713 580
- FR-A- 2 383 053
- GB-A- 1 464 372
- US-A- 3 051 273
- US-A- 3 720 372
- US-A- 4 773 513
- US-A- 4 836 341

## Beschreibung

Die Erfindung betrifft eine Antriebseinheit mit einem Motor, einem Retarder und einer Pumpe. Eine solche Antriebseinheit ist aus DE 37 13 580 C1 bekannt geworden.

Bei dieser bekannten Antriebseinheit dient der Retarder dazu, im Kühlmittelkreislauf das Kühlmittel der Fahrzeug-Kühlanlage sowohl im normalen Traktionsbetrieb als auch im Dauerbremsbetrieb umzuwälzen ("Wasserpumpen-Retarder"). Dabei wird dieser Retarder durch eine geeignete Ventilanordnung derart gesteuert, daß er im Bedarfsfalle auch Bremsarbeit leisten kann. Bei der Funktion "Pumpen" soll die Leistungsaufnahme möglichst gering sein, während sie bei der Funktion "Bremsen" möglichst hoch sein soll. Die technischen Anforderungen sind somit sehr gegensätzlich. Dies führt dazu, daß die Funktion "Pumpen" nicht effektiv genug arbeitet, weil nämlich hierbei zu viel Leistung aufgenommen wird.

Trennt man hingegen die beiden Funktionen baulich, indem man außer dem Retarder eine separate Pumpe vorsieht, so lassen sich zwar Retarder und Pumpe derart auslegen, daß die Funktionen optimal erfüllt werden. Jedoch hat ein solches System einen hohen Raumbedarf. Dies ist nachteilig, da der Raum in Fahrzeugen gerade an der betreffenden Stelle sehr beengt ist.

GB-A-1 464 372 offenbart eine Antriebseinheit mit den Merkmalen des Oberbegriffs des Anspruchs 1.

Der aus der US 3 720 372 bekannte Retarder ist mit dem Antriebsmotor integriert, dauernd mit der Kurbelwelle verbunden und stets vom Kühlmittel der Kühleinrichtung durchströmt. Dabei dient der Rotor des Retarders als Umwälzpumpe anstelle einer gesonderten Kühlmittelpumpe. Der Zweck dieser Einrichtung besteht darin, mittels des Retarders das Kühlmittel aufzuheizen, um den Fahrgast-Innenraum zu erwärmen. Diesem Zweck dient auch eine am Retarder angeordnete Steuereinrichtung, die lediglich die Verteilung des Kühlmittels in Abhängigkeit von dessen Temperatur in einer Bypaß-Leitung durch den Kühler leitet.

Aus der DE 33 01 560 C1 ist ferner ein Retarder bekannt, der über eine schaltbare Kupplung mit der Kurbelwelle des Antriebsmotors und den Treibrädern des Fahrzeuges verbunden ist. Die Aufgabe des Retarders ist jedoch nicht die Aufnahme und Umsetzung hoher kinetischer Bremsenergie des Fahrzeuges in Wärme. Der Retarder wird ausschließlich als Heizgerät betrieben, wobei die Heizleistung unter Berücksichtigung einer zur Verfügung stehenden Antriebsleistung gesteuert werden soll. Das Kühlmittel des Motors ist gleichzeitig die Betriebsflüssigkeit des Retarders.

Ein aus der DE-AS 19 46 167 bekannter Retarder ist direkt mit der Kurbelwelle einer Verbrennungskraftmaschine verbunden, deren Kühlmittel auch als Betriebsflüssigkeit für den Retarder dient. Der Vorteil dieser Betriebsweise liegt darin, daß die anfallende Wärme unmittelbar in dem dem Kühler zugeleiteten Kühlmittel entwickelt wird und ein Wärmetauscher zwischen zwei Flüssigkeiten entbehrlich ist.

EP 0 707 140 A1 beschreibt eine Antriebseinheit mit einem Motor und einem hydrodynamischen Retarder. Dabei ist zum Fördern des Kühlmittels ein Pumpenlaufrad vorgesehen, das axial zum Rotorschaufelrad des Retarders angeordnet ist.

Bei bekannten Antriebseinheiten tritt während des Nicht-Bremsbetriebes eine Verlustleistung im Retarder auf. Dies geht darauf zurück, daß der Retarder mit Luft gefüllt ist, die bei diesem Betrieb zirkuliert. Außerdem können noch Reste des Arbeitsmediums im Arbeitskreislauf vorhanden sein. Beides führt zu einer erheblichen Erwärmung des Kreislaufes. Auch kann es im Nicht-Bremsbetrieb zur Bildung von Sekundärkreisläufen kommen. Diese verursachen ebenfalls eine Verlustleistung.

Der Erfindung liegt die Aufgabe zugrunde, eine Antriebseinheit der eingangs beschriebenen Art derart zu gestalten, daß Verlustleistungen weitgehend vermieden und auf niedrigem thermischen Niveau gehalten werden. Außerdem soll im Bremsbetrieb die Bildung von Sekundärkreisläufen vermieden werden.

Diese Aufgabe wird durch die Merkmale von Anspruch 1 gelöst.

Das genannte Ventil ist während des Bremsbetriebes geschlossen, damit keine Nebenkreisläufe entstehen können, während es im Nicht-Bremsbetrieb geöffnet ist.

Durch eine Kühlmittelzufuhr zum Retarder und eine entsprechende Abfuhr während des Nicht-Bremsbetriebes wird Ventilationswärme abgeführt.

Das sonst unvermeidliche Verlust-Bremsmoment wird bei allen Betriebszuständen des Nicht-Bremsbetriebes, des sogenannten Pumpbetriebes, weitgehend minimiert und thermisch beherrscht. Im Bremsbetrieb hingegen werden Querströmungen und Sekundärkreisläufe vermieden.

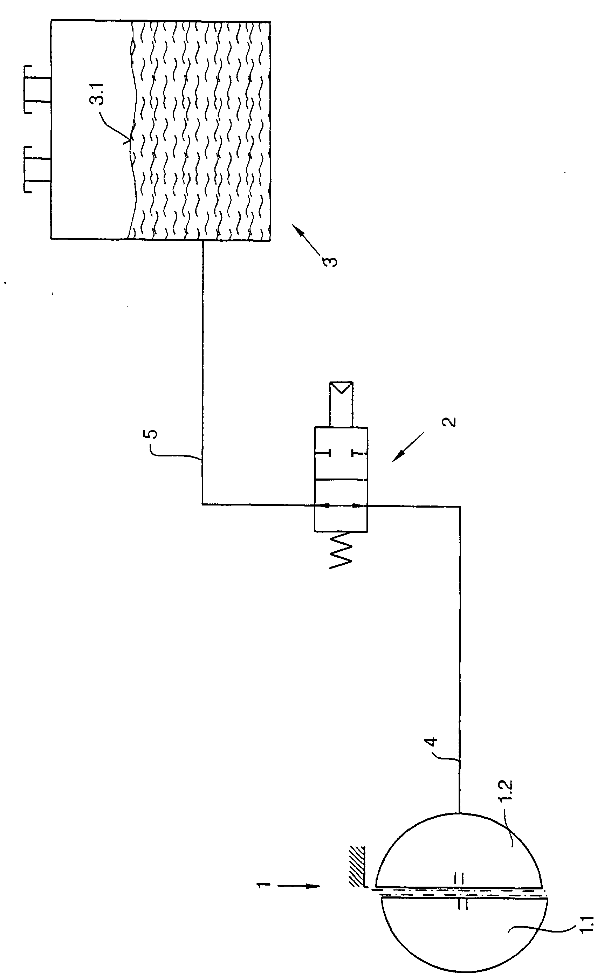

Die Erfindung ist anhand der Zeichnung näher erläutert. Darin ist schematisch ein Bremssystem dargestellt. Dieses umfaßt einen Retarder 1, ein Ventil 2 sowie einen Arbeitsmediumbehälter 3.

Retarder 1 weist ein Rotorschaufelrad 1.1 und ein Statorschaufelrad 1.2 auf, die miteinander einen Arbeitsraum bilden.

Die genannten Aggregate sind durch die folgenden Leitungen miteinander verbunden:
Zwischen Retarder 1 und Ventil 2 befindet sich eine Leitung 4, die an das Statorschaufelrad 1.2 angeschlossen ist. Zwischen Ventil 2 und Arbeitsmediumbehälter 3 befindet sich eine Leitung 5. Die Leitung 5 mündet unterhalb des Spiegels 3.1 des Arbeitsmediums im Arbeitsmediumbehälter 3. Um den Retarder im Pumpbetrieb auf einem thermisch niedrigen Niveau zu halten, und um gleichzeitig die anfallende Verlustleistung gering zu halten, wird gemäß der Erfindung eine definierte Menge des Arbeitsmediums als Kühlmedium zum Retarder geführt, um dort Wärme aufzunehmen und diese zum Behälter 3 weiterzuführen. Dabei ist darauf zu achten, daß die Widerstände des Leitungssystemes möglichst gering gehalten werden, um eine verlustarme Abfuhr des als Kühlmittel dienenden Arbeitsmediums zu gewährleisten. Sind die Strömungswiderstände bzw. die zugeführte Kühlmittelmenge zu hoch, so würde sich dies negativ auf die Verluste am Retarder auswirken.

Damit sich beim Bremsbetrieb keine Sekundärkreisläufe bilden, ist das Ventil 2.0 zu schließen. Dies geschieht im dargestellten Fall mittels einer pneumatischen Steuerleitung.

Es sind auch andere Lösungen denkbar, beispielsweise ein automatisch betätigtes hydraulisches 2/2-Wege-Ventil, oder ein elektrisch angesteuertes 2/2-Wege-Ventil. Diese Lösungen sind aber aufwendiger.

Auch kann es zweckmäßig sein, ein dem System angepaßtes Rückschlagventil vorzusehen, um ein Rückströmen von Arbeitsmedium in den Retarder beim Pumpbetrieb zu vermeiden.

## Patentansprüche

1. Antriebseinheit
1.1 mit einem hydrodynamischen Wasserpumpen - Retarder (1);
1.2 der Retarder (1) umfaßt ein Rotorschaufelrad (1.1), ein Statorschaufelrad (1.2) und ein diese beiden umschließendes Gehäuse;
1.3 mit einen Kühlmittelkreislauf für eine Brennkraftmaschine, dessen Kühlmittel zugleich Arbeitsmedium des Retarders (1) ist;
1.4 es ist ein Arbeitsmediumbehälter (3) vorgesehen;
1.5 zwischen dem Retarder (1) und dem Arbeitsmediumbehälter (3) ist eine Leitung (4, 5) mit einem Ventil (2) vorgesehen;
1.6 es ist eine Kühlmittelzufuhr zum Retarder (1) vorgesehen,
**dadurch gekennzeichnet, daß**
1.7 das Ventil (2) derart geschaltet ist, daß es im Bremsbetrieb geschlossen, sind um Nicht-Bremsbetrieb Zwecks Abfuhr von Ventilationswärme geöffnet ist.

2. Antriebseinheit nach Anspruch 1, **dadurch gekennzeichnet, daß** das Ventil (2) ein 2/2-Wege-Ventil ist.

3. Antriebseinheit nach Anspruch 1 oder 2, **dadurch gekennzeichnet, daß** das Ventil (2) mit einem im System vorhandenen hydraulischen Druck betätigbar ist.

## Claims

1. Drive unit
1.1 with a hydrodynamic water pump retarder (1),
1.2 the retarder (1) comprises a rotor bucket wheel (1.1), a stator bucket wheel (1.2) and a housing enclosing the two;
1.3 with a coolant circuit for an internal combustion engine, the coolant of which is simultaneously the working medium of the retarder (1) ;
1.4 an working medium container (3) is provided;
1.5 a line (4, 5) with a valve (2) is provided between the retarder (1) and the working medium container (3) ;
1.6 a coolant feed to the retarder (1) is provided,
**characterised in that**
1.7 the valve (2) is connected in such a way that it is closed during brake operation, and when the brake is not in operation, is open for discharge of ventilation heat.

2. Drive unit according to claim 1, **characterised in that** the valve (2) is a 2/2 way valve.

3. Drive unit according to claim 1 or 2, **characterised in that** the valve (2) can be actuated by a hydraulic pressure present in the system.

## Revendications

1. Unité de propulsion
1.1 avec un ralentisseur hydrodynamique à pompe hydraulique
1.2 le ralentisseur (1) comprenant une roue à aubes (1.1) de rotor, une roue à aubes (1.2) de stator et un carter qui entoure les deux roues,
1.3 avec un circuit d'agent de refroidissement pour un moteur à combustion interne, dont l'agent de refroidissement est en même temps le fluide de travail du ralentisseur (1);
1.4 avec un réservoir (3) à fluide de travail;
1.5 avec une conduite (4, 5) comportant une vanne (2), prévue entre le ralentisseur (1) et le réservoir (3) à fluide de travail;
1.6 avec une arrivée d'agent de refroidissement menant au ralentisseur (1),
**caractérisée en ce que**
1.7 la vanne (2) est connectée de telle sorte qu'elle soit fermée en mode freinage et ouverte en mode sans freinage, aux fins d'évacuer la chaleur de ventilation.

2. Unité de propulsion selon la revendication 1, **caractérisée en ce que** la vanne (2) est un distributeur 2/2.

3. Unité de propulsion selon la revendication 1 ou 2, **caractérisée en ce que** la vanne (2) peut être actionnée par une pression hydraulique présente dans le circuit.
